# EUROPÄISCHE PATENTSCHRIFT

(11) **EP 0 362 239 B1**
(45) Veröffentlichungstag und Bekanntmachung des Hinweises auf die Patenterteilung: **10.03.1993**
(21) Anmeldenummer: 88904396.4
(22) Anmeldetag: 20.05.1988
(51) Int. Cl.: B60R 22/42, B60R 22/18

(54) **KLEMMVORRICHTUNG FÜR DAS GURTBAND VON KRAFTFAHRZEUGSICHERHEITSGURTEN**
CLAMPING DEVICE FOR THE BELT BAND OF MOTOR VEHICLE SAFETY BELTS
DISPOSITIF DE SERRAGE POUR LA SANGLE DE CEINTURES DE SECURITE DE VEHICULES A MOTEUR

(30) Priorität: 22.05.1987 DE 3717252
(43) Veröffentlichungstag der Anmeldung: 11.04.1990
(73) Patentinhaber: GENERAL ENGINEERING (NETHERLANDS) B.V., NL-3581 CV Utrecht (NL)
(72) Erfinder: Ernst, Hans-Hellmut, D-2070 Ahrensburg (DE)
(74) Vertreter: Gossel, Hans K., Dipl.-Ing.
(86) Internationale Anmeldenummer: DE8800299
(87) Internationale Veröffentlichungsnummer: WO8809274

(56) Entgegenhaltungen:
- EP-A- 0 056 894
- EP-A- 0 180 310
- EP-A- 0 185 367
- WO-A-86/00585
- DE-U- 8 437 581
- US-A- 4 371 126

## Beschreibung

Die Erfindung bezieht sich auf eine Klemmvorrichtung für das Gurtband von Fahrzeugsicherheitsgurten mit je einem Klemmglied auf jeder Seite des Gurtbandes, wobei ein Klemmglied beweglich und ein Klemmglied unbeweglich ist und wobei das unbewegliche Klemmglied als glatte Gegendruckfläche ausgebildet ist.

Derartige Klemmvorrichtungen sind in unterschiedlichen Ausgestaltungen bekannt, auch eingebaut in selbstsperrende Gurtbandaufroller, um die beim Sperren derselben aufgrund des sogenannten Filmspuleneffektes noch ausziehbare Gurtbandlänge von bis zu 100 mm zu vermeiden und bis zur maximalen Belastung nur einen Gurtbandauszug von beispielsweise etwa 30 mm zuzulassen.

Aus der DE-A-3 242 783 ist eine Klemmvorrichtung gemäß dem Oberbegriff des Anspruchs 1 bekannt. Dort ist der fahrzeugsensitiv sperrbare Gurtbandauroller bezüglich der nachgeordneten Klemmvorrichtung beweglich angeordnet und von derselben weg federbelastet. Die Klemmvorrichtung besteht aus einem stationären Klemmglied und einem beweglichen Klemmglied, nämlich einem Gehäuse, durch welches sich das vom Aufroller kommende Gurtband erstreckt, und einem im Gehäuse neben dem Gurtband verschiebbaren Klemmkeil. Beim Sperren des Aufrollers bewirkt ein entsprechender Zug am Gurtband, daß er sich entgegen der Wirkung seiner Federbelastung auf die Klemmvorrichtung zu verschiebt, wodurch auch der Klemmkeil in Gurtbandauszugsrichtung verschoben wird, um das Gurtband im Gehäuse festzuklemmen. Die dem Gurtband einerseits gegenüberliegende, ebene Klemmfläche des Klemmkeils und die dem Gurtband andererseits gegenüberliegende, ebene Klemmfläche des Gehäuses sind jeweils mit einer Beschichtung aus federndem Material mit hohem Reibungskoeffizienten versehen.

Diese bekannte Konstruktion ist verhältnismäßig großvolumig, schwer und teuer. Nachteilig ist ferner, daß das Gurtband dann, wenn der Aufroller bei jeder Fahrzeugverzögerung größer als 0,45 g sperrt und die Klemmvorrichtung aktiviert, beträchtlich in Mitleidenschaft gezogen wird, da es bei jeder der entsprechend häufig erfolgenden Klemmungen in der Klemmvorrichtung durch die sehr reibintensiven Beschichtungen derselben aufgerauht wird, was die Gefahr mit sich bringt, daß das Gurtband nach den geforderten 20.000 Klemmungen so stark beschädigt ist, daß seine Festigkeit nicht mehr ausreicht, und auch den Sicherheitsgurttragekomfort beeinträchtigt. Besonders schädlich wirkt sich insoweit die Beschichtung der Klemmfläche des Gehäuses aus, weil sich das Gurtband bei jedem Klemmvorgang vor allem bezüglich dieser Beschichtung bewegt, wobei diese Relativbewegung und somit auch der unerwünschte Gurtbandauszug um so größer sind, je flexibler die Klemmvorrichtung ausgebildet ist, so daß sich also auch die federnde Ausbildung der Beschichtungen der Klemmvorrichtung zusätzlich zu ihrem hohen Reibungskoeifizienten nachteilig auswirkt. Mit ihr ist auch die Gefahr verbunden, daß die Klemmvorrichtung sich nach einem Klemmvorgang nicht mehr löst, insbesondere dann, wenn der Klemmkeil einen verhältnismäßig spitzen Keilwinkel aufweist. Zwar kann der Beeinträchtigung des Gurtbandes dadurch entgegengewirkt werden, daß man die Klemmvorrichtung erst bei den verhältnismäßig hohen Fahrzeugverzögerungen wirksam werden läßt, wie sie bei einem Unfall auftreten, jedoch läßt sich dann ein möglichst kurzer Gurtbandauszug nicht erreichen.

Bei einer ähnlichen bekannten Konstruktion wirkt der Klemmkeil mit einer beweglichen Klemmwand zusammen und werden der Klemmkeil sowie die Klemmwand zur Anlage am Gurtband gemeinsam verstellt, wobei der Klemmkeil sich auf die Klemmwand zu bewegt. Die beiden Klemmflächen für das Gurtband des Klemmkeils bzw. der Klemmwand sind jeweils mit Querrippen versehen, welche so angeordnet sind, daß die Klemmflächen formschlüssig ineinandergreifen können, um das sich zwischen ihnen erstreckende Gurtband serpentinenartig zu verformen und festzuklemmen (US-A 3 504 867).

Auch diese bekannte Konstruktion ist relativ großvolumig, schwer und teuer. Nachteilig ist weiterhin, daß der Klemmkeil sowie die Klemmwand jeweils eine verhältnismäßig große Masse aufweisen und die Querrippen ihrer Klemmflächen für das Gurtband einen relativ großen gegenseitigen Abstand und somit einen entsprechend langen gemeinsamen Verstellweg zum Gurtbandfestklemmen bedingen, welcher aufgrund der Massenträgheit des Klemmkeils und der Klemmwand verzögert durchlaufen wird, so daß es relativ lange dauert, bis der Klemmkeil und die Klemmwand in die Klemmstellung gelangen und ein entsprechend langer Gurtbandauszug währenddessen unvermeidlich ist. Das dabei an den agressiven Querrippen vorbeilaufende Gurtband wird durch die Querrippen sehr in Mitleidenschaft gezogen, desgleichen durch die serpentinenartige Festklemmung, welche sich ebenfalls negativ auf die Festigkeit des Gurtbandes und den Sicherheitsgurttragekomfort auswirkt. Auch diese Konstruktion ist also nur für ein einmaliges Gurtbandfestklemmen bei einem Unfall mit entsprechend langem Gurtbandauszug geeignet.

Der Erfindung liegt die Aufgabe zugrunde, eine Klemmvorrichtung der eingangs angegebenen Art zu schaffen, welche auf einfache Weise ein schonendes und dennoch zuverlässiges Festklemmen des Gurtbandes mit kurzem Gurtbandauszug gewährleistet und somit auch häufige Klemmvorgänge ohne nachteilige Folgen für das Gurtband ermöglicht, ferner nach jedem Klemmvorgang wieder zuverlässig löst und das Gurtband freigibt.

Diese Aufgabe ist durch die im kennzeichnenden Teil des Patentanspruchs 1 angegebenen Merkmale gelöst. Vorteilhafte Ausgestaltungen der erfindungsgemäßen Klemmvorrichtung sind in den restlichen Patentansprüchen angegeben.

Bei der erfindungsgemäßen Klemmvorrichtung sind alle Klemmglieder zumindest an sämtlichen bei einem Klemmvorgang mit dem zugehörigen Gurtband in Berührung kommenden Stellen mit einer Gleitschicht überzogen, welche aufgrund ihres außerordentlich geringen Reibungskoeffizienten gegenüber dem Gurtband eine größtmögliche Schonung desselben beim Angriff der Klemmglieder am Gurtband sicherstellt, ebenso wie das zuverlässige Lösen derselben vom Gurtband nach einem Klemmvorgang.

Vorzugsweise ist das bzw. jedes bewegliche Klemmglied gleitend verstellbar und sind auch die entsprechenden Gleitflächen mit einer Gleitschicht überzogen. Auf diese Weise läßt sich die Schonung des Gurtbandes und das Lösen der Klemmvorrichtung noch weiter verbessern.

Vorteilhafterweise ist die Gleitschicht an den Gurtbandberührungsstellen und gegebenenfalls an den Gleitflächen der Klemmglieder dünn, beispielsweise mit einer Stärke von etwa 0,1 mm, und hart ausgebildet. Vorzugsweise sind auch die Klemmglieder starr ausgebildet, ferner starr abgestützt und so vorgesehen, daß sie schon bei geringfügiger gegenseitiger Verstellung zur Anlage am Gurtband kommen. Mit Vorteil weist das bzw. jedes bewegliche Klemmglied eine geringe Masse auf, wozu es aus einer Aluminiumlegierung oder einem harten Kunststoff, beispielsweise einem Duromeren, bestehen kann, was auch der erwähnten Starrheit zugute kommt.

Diese Maßnahmen sind im Hinblick auf ein extrem schnelles Festklemmen des Gurtbandes günstig, womit nicht nur ein außerordentlich kurzer Gurtbandauszug während des Klemmvorgangs verbunden ist, sondern auch aufgrund der entsprechend geringen Relativbewegung zwischen Gurtband und Klemmgliedern eine erhöhte Schonung des Gurtbandes beim Klemmvorgang. Auch sind diese Maßnahmen in bezug auf das anschließende Lösen der Klemmvorrichtung von Vorteil. Die möglichst starre Ausbildung der Klemmvorrichtung mit möglichst geringen Abständen ihrer Klemmglieder vom zugehörigen Gurtband ergibt einen kurzen Verstellweg für das bzw. jedes bewegliche Klemmglied bis zum Festklemmen des Gurtbandes, der dann auch noch praktisch verzögerungsfrei durchlaufen wird, wenn es eine geringe Massenträgheit aufweist. Insbesondere die Starrheit der Klemmvorrichtung, einschließlich der Gleitschichtinkompressibilität, wirkt sich auch bezüglich des Lösens nach einem Klemmvorgang vorteilhaft aus.

Die erfindungsgemäße Klemmvorrichtung ist insbesondere dazu geeignet, mit einem selbstsperrenden Gurtbandaufroller, insbesondere einem fahrzeugsensitiv und schon bei Fahrzeugverzögerungen ab beispielsweise 0,45 g sperrenden Gurtbandaufroller, vereinigt zu werden, um dessen Gurtband festzuklemmen. Dabei wird das bzw. jedes bewegliche Klemmglied der Klemmvorrichtung mit dem vorgeschalteten Gurtbandaufroller verbunden, so daß es beim Sperren desselben verstellt wird und alle Klemmglieder der Klemmvorrichtung an dem sich vom Aufroller weg erstreckenden Gurtband zur Anlage kommen. Vorzugsweise wird dafür Vorsorge getroffen, daß das bzw. jedes bewegliche Klemmglied zusammen mit dem sich vom Aufroller weg bewegenden Gurtband, jedoch schneller als dasselbe verstellbar ist, wozu zwischen dem Gurtbandaufroller bzw. dessen Fahrzeugverzögerungssensor und dem Klemmglied ein entsprechender Übersetzungsmechanismus vorgesehen werden kann. Diese schnellere Klemmgliedbewegung bei einem Klemmvorgang, so daß das Gurtband durch das oder die beweglichen Klemmglieder überholt wird, wirkt sich insbesondere dann schonend auf das Gurtband aus, wenn das bzw. die Klemmglieder mit einer verzahnten Klemmfläche am Gurtband angreifen, und läßt einen noch kürzeren Gurtbandauszug während des Klemmvorgangs erzielen. Für das Gurtband besonders schonend ist es, wenn die Klemmfläche für das Gurtband eine sägezahnartige Verzahnung aufweist, welche in Gurtbandauszugsrichtung steiler und in umgekehrter Richtung weniger steil ist.

Vorzugsweise weist die erfindungsgemäße Klemmvorrichtung ein bewegliches Klemmglied und ein stationären Klemmglied auf, welche beiderseits des zugehörigen Gurtbandes angeordnet sind und wobei das bewegliche Klemmglied von einem in einem Gehäuse entlang einer Gleitfläche desselben verschiebbaren Klemmkeil mit einer an dieser Gleitfläche anliegenden Gleitfläche einerseits und einer verzahnten Klemmfläche für das Gurtband andererseits gebildet ist, während das stationäre Klemmglied von einer Klemmwand des Gehäuses gebildet ist.

Mit Vorteil sind die beiden Gleitflächen des Gehäuses bzw. des Klemmkeils jeweils eben ausgebildet wobei die Gleitfläche des Gehäuses mit dem Gurtband einen Winkel im Bereich von 22^{o} bis 28^{o}, vorzugsweise einen Winkel von 25^{o}, einschließt, womit sich ein sehr kurzer Verstellweg für den Klemmkeil aus der Lösestellung in die Klemmstellung erreichen läßt.

Vorzugsweise weist dabei der Klemmkeil einen Keilwinkel größer als der Winkel zwischen der ihn abstützenden Gleitfläche des Gehäuses und dem sich durch letzteres erstreckenden Gurtband auf, beispielsweise einen Keilwinkel von 25,5^{o} bei einem Gleitflächenwinkel von 25^{o}. Es ergibt sich dann ein zur Spitze des Klemmkeils hin breiter werdender Klemmspalt zwischen dem Klemmkeil und der Klemmwand des Gehäuses, wenn sie am Gurtband anliegen. Ein solcher V-förmiger Klemmspalt ist für die Klemmdruckeinleitung in das festgeklemmte Gurtband günstig und erhöht dessen Belastbarkeit. Derselbe Effekt läßt sich auch dadurch erzielen, daß die beiden Gleitflächen des Gehäuses bzw. des Klemmkeils in der Bewegungsrichtung des letzteren entsprechend konvex bzw. konkav gekrümmt werden.

Vorzugsweise ist die Klemmfläche für das Gurtband am Klemmkeil mit Sägezähnen versehen, deren der Basis des Klemmkeils zugewandten Flanken senkrecht zum benachbarten Gurtband orientiert sind und somit steiler verlaufen als die der Spitze des Klemmkeils zugewandten Flanken der Sägezähne.

Desgleichen ist es bevorzugt, die Klemmfläche des Klemmkeils mit kegelförmigen Zähnen zu versehen, welche dann als Sägezähne wirken, wenn sie jeweils als schrägachsiger Kegel ausgebildet sind, dessen der Basis des Klemmkeils zugewandte Mantellinie senkrecht zum benachbarten Gurtband verläuft. Die kegelförmigen Zähne können eine Fußdurchmesser aufweisen, welcher etwa 1,5 mal so groß wie die Zahnhöhe ist, die beispielsweise bei 0,5 mm liegen kann.

Vorteilhafterweise sind die Zähne der Klemmfläche des Klemmkeils in quer zum benachbarten Gurtband verlaufenden und gegenseitig versetzten Reihen angeordnet, so daß jede Gruppe von vier einander benachbarten Zähnen an den Ecken eines Quadrates liegt, dessen Seitenlänge 2 bis 2,5 mal so groß wie die Zahnhöhe von beispielsweise 0,5 mm ist. Diese Zahnverteilung wirkt sich besonders günstig bei den jeweils als schrägachsiger Kegel ausgebildeten Sägezähnen aus.

Die Verzahnung der Klemmfläche für das Gurtband am Klemmkeil gewährleistet trotz ihres Überzugs mit einer Gleitschicht ein sicheres Gurtbandfestklemmen ohne merklichen Schlupf und entsprechenden Gurtbandauszugsverlust. Insbesondere die in der erwähnten Weise verteilten und jeweils als schrägachsiger Kegel ausgebildeten Sägezähne lassen bei einem Klemmvorgang mit den Kegelspitzen einen sicheren Formschluß mit dem Gurtband zustande kommen, ohne dieses aufzurauhen und seine Belastbarkeit selbst nach einer Vielzahl von Klemmvorgängen zu vermindern. Dabei kann eine sehr geringe Zahnhöhe vorgesehen werden, beispielsweise von nur 0,5 mm, wie erwähnt, was für einen schnellen Klemmvorgang vorteilhaft ist.

Für einen kurzen Verstellweg des Klemmkeils zum Festklemmen des benachbarten Gurtbandes im Gehäuse zwischen dessen Klemmwand und dem Klemmkeil selbst ist es weiterhin vorteilhaft, wenn die Zähne der Klemmfläche des Klemmkeils ein Gesamtvolumen aufweisen, welches etwa 80 % des Gesamtvolumens der Freiräume entspricht, die das Gewebe des Gurtbandes im Bereich der Klemmfläche aufweist. Damit wird erreicht, daß sich in dem bei einem Klemmvorgang festgeklemmten Gurtbandabschnitt nach dem Eindringen der Zähne kaum noch Luft befindet und allenfalls noch eine minimale Zusammendrückbarkeit des Gurtbandabschnitts verbleibt, wenn überhaupt.

Vorzugsweise sind Führungen für das Gurtband vorgesehen, so daß es sich dicht an der Klemmfläche für das Gurtband entlang erstreckt, die an der Klemmwand des Gehäuses vorgesehen ist. Letzteres ist vorteilhafterweise in einem U-förmigen Halteblech angeordnet, wobei die Klemmwand des Gehäuses mit Warzen auf der ihrer Klemmfläche für das Gurtband abgewandten Seite in entsprechende Öffnungen des Bodens und ein das Gehäuse auf der der Klemmwand abgewandten Seite des Klemmkeils durchsetzender Quersteg in entsprechende Öffnungen der Seitenschenkel des Halteblechs eingreifen.

Mit Vorteil ist das bzw. jedes bewegliche Klemmglied bzw. der Klemmkeil, der erfindungsgemäßen Klemmvorrichtung entgegen der Wirkung einer Rückholfederbelastung verstellbar.

Nachstehend sind zwei Ausführungsformen der erfindungsgemäßen Klemmvorrichtung anhand von Zeichnungen beispielsweise beschrieben. Darin zeigt:
- Fig. 1: eine erste Ausführungsform im Längsschnitt;
- Fig. 2: eine zweite Ausführungsform im Längsschnitt;
- Fig. 3a: die Verzahnung der Klemmfläche des Klemmkeils gemäß Fig. 1 bzw. 2 in größerem Maßstab; und
- Fig. 3b: die Ansicht von links der Verzahnung gemäß Fig. 3a.

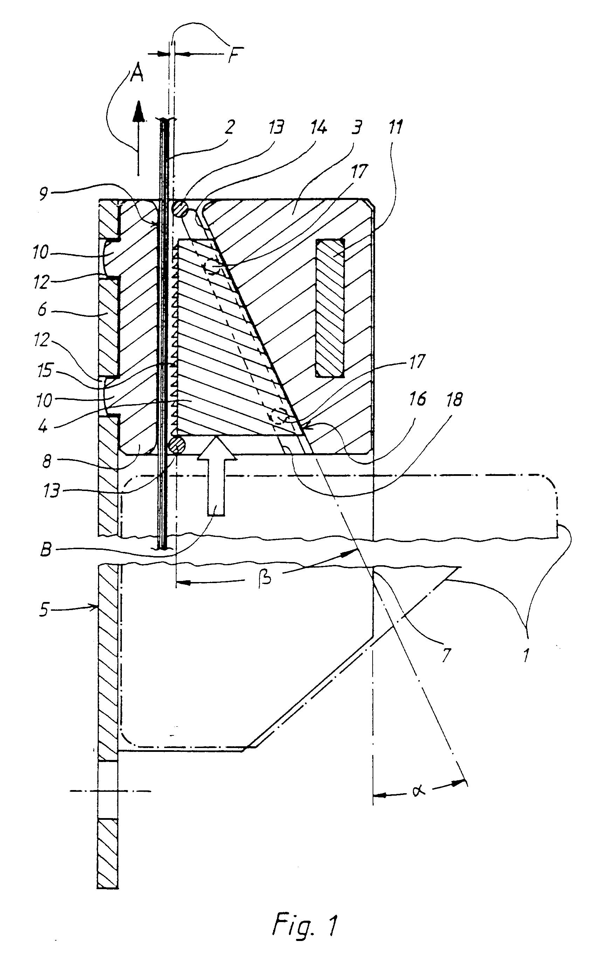

Die Klemmvorrichtung gemäß Fig. 1 ist mit einem strichpunktiert angedeuteten Gurtbandaufroller 1 zu einer Baueinheit vereinigt, um das von demselben in Richtung des Pfeils A abwickelbare Gurtband 2 festzuklemmen, wenn der vorgeschaltete Aufroller 1 fahrzeugsensitiv sperrt, beispielsweise bei einer Fahrzeugverzogerung von 0,45 g. Der Gurtbandaufroller 1, welcher keine nennenswerte Belastung aufzunehmen braucht und daher in kostengünstiger Leichtbauweise aus Kunststoff ausgeführt sein kann, und die Klemmvorrichtung, welche ein Gehäuse 3 und einen Klemmkeil 4 aufweist, sind in einem gemeinsamen U-förmigen Halteblech 5 mit einem Boden 6 und zwei Seitenschenkeln 7 angeordnet.

Das Gehäuse 3 weist eine Klemmwand 8 mit einer ebenen Klemmfläche 9 für das Gurtband 2 auf und ist mittels Warzen 10 auf der der Klemmfläche 9 abgewandten Seite der Klemmwand 8 sowie eines Querstegs 11 im Halteblech 5 befestigt, welcher das Gehäuse 3 auf der der Klemmwand 8 abgewandten Seite des Klemmkeils 4 durchsetzt. Die Warzen 10 greifen in entsprechende Öffnungen 12 des Halteblechbodens 6 ein, der Quersteg 11 mit den beiden aus dem Gehäuse 3 ragenden Enden in entsprechende Öffnungen der Seitenschenkel 7 des Halteblechs 5. Das Gurtband 2 erstreckt sich entlang der Klemmfläche 9 und wird mittels Führungen 13 eng daran vorbeigeleitet.

Der Klemmkeil 4 ist entlang einer ebenen Gleitfläche 14 des Gehäuses 3 entgegen der Wirkung einer Rückholfederbelastung in Richtung des Pfeils B aus der Lösestellung gemäß Fig. 1 in die Klemmstellung verschiebbar, um mit einer Klemmfläche 15 auf der dem Gurtband 2 zugewandten Seite an demselben zur Anlage zu kommen. Er liegt mit einer eigenen ebenen Gleitfläche 16 an der Gleitfläche 14 des Gehäuses 3 an, ist starr ausgebildet und weist eine geringe Masse auf. Dazu besteht er zweckmäßigerweise aus einer Aluminiumlegierung oder einem harten Kunststoff, insbesondere einem Duromeren.

Die Gleitfläche 14 des Gehäuses 3 kann mit dem Gurtband 2 einen Winkel α im Bereich von 22^{o} bis 28^{o} einschließen. Im dargestellten Fall liegt der Gleitflächenwinkel α bei 25^{o}. Damit sich in der Klemmstellung des Klemmkeils 4, wenn also sowohl er als auch die Klemmwand 8 des Gehäuses 3 am Gurtband 2 anliegen, zwischen denselben ein zur Spitze des Klemmkeils 4 hin breiter werdender und somit in Fig. 1 nach oben offener V-förmiger Klemmspalt ergibt, ist der Keilwinkel β des Klemmkeils 4 größer als der Gleitflächenwinkel α . Im dargestellten Fall liegt der Keilwinkel β bei 25,5^{o}.

Der Klemmkeil 4 ist mittels Gleitzapfen 17 an den beiden den Seitenschenkeln 7 des Halteblechs 5 benachbarten Seiten geführt, welche mit Spiel in zwei Gleitnuten 18 eingreifen, die beiderseits des Klemmkeils 4 im Gehäuse 3 vorgesehen sind und sich parallel zu dessen Gleitfläche 14 für den Klemmkeil 4 erstrecken. Dessen Klemmfläche 15 für das Gurtband 2 ist mit einer sägezahnartigen Verzahnung versehen, welche in der Gurtbandauszugsrichtung A steiler und in umgekehrter Richtung weniger steil ist und deren Zahnhöhe t bei nur 0,5 mm liegt. In der Lösestellung gemäß Fig. 1 des Klemmkeils 4 ist zwischen der Verzahnung und dem benachbarten Gurtband 2 nur ein enger Freispalt F mit einer Breite von 0,5 mm vorhanden.

Bei dieser geringen Zahnhöhe t sowie Breite des Freispaltes F und diesem verhältnismäßig großen Gleitflächenwinkel α braucht der Klemmkeil 4 nur einen Weg von 2,5 mm in Richtung des Pfeils B zurückzulegen, um aus der Lösestellung gemäß Fig. 1 in die Klemmstellung bei voller Belastung zu gelangen. Bereits nach einem Hub von 2,15 mm hat er sich um eine Strecke von 1 mm in Fig. 1 nach links bewegt, so daß die Freispaltbreite von 0,5 mm und die Zahnhöhe t von ebenfalls 0,5 mm der Verzahnung seiner Klemmfläche 15 überwunden sind und der Klemmkeil 4 formschlüssig am Gurtband 2 angreift, welches auf der gegenüberliegenden Seite an der Klemmfläche 9 der Gehäuseklemmwand 8 anliegt. Er verschiebt sich dann noch um eine weitere Strecke von 0,35 mm in Richtung des Pfeils B infolge der Kompression des Gurtbandes 2 durch den Klemmdruck. Um den extrem kurzen Verstellweg von nur 2,5 mm des Klemmkeils 4 und einen entsprechend kurzen Gurtbandauszug in Richtung des Pfeils A bei einem Klemmvorgang sicher zu gewährleisten, ist der Klemmkeil 4 starr ausgebildet, ebenso wie das Gehäuse 3, welches durch das Halteblech 5 noch verstärkt wird, an dessen Boden 6 es sich einerseits abstützt und mit dessen Seitenschenkeln 7 es andererseits über den Quersteg 11 verbunden ist. Die harte und dehnungsarme Ausbildung sowohl des Klemmkeils 4 als auch des Gehäuses 3 schließt jegliche Vergrößerung des Klemmkeilhubes infolge elastischer Verformungen aus.

Auch die leichte Ausbildung des Klemmkeils 4 wirkt sich im Hinblick auf die Erzielung eines schnellen Klemmvorgangs positiv aus. Aufgrund seiner geringen Massenträgheit kann sich der Klemmkeil 4 praktisch verzögerungsfrei bewegen und selbst bei einem ruckartigen Gurtbandauszug augenblicklich und ohne Nacheilung in Richtung des Pfeils B mit dem Gurtband 2 mitlaufen, so daß keine Relativbewegung zwischen dem Gurtband 2 und der in dieser Richtung agressiven Verzahnung der Klemmfläche 15 des Klemmkeils 4 auftritt, welche Gurtbandverletzungen zur Folge hätte, und der unerwünschte Gurtbandauszug sehr kurz bleibt.

Die Bewegung des Klemmkeils 4 in Richtung des Pfeils B aus der Lösestellung gemäß Fig. 1 in die Klemmstellung erfolgt dann, wenn der Gurtbandaufroller 1 sperrt, wozu der Klemmkeil 4 über einen Stößel oder dergleichen mit dem Gurtbandaufroller 1 bzw. dessen Fahrzeugverzögerungssensor verbunden ist. Um den Klemmvorgang weiter zu verbessern, kann diese Verbindung auch mit Hilfe eines Übersetzungsmechanismus erfolgen, so daß der Klemmkeil 4 sich bei einem Klemmvorgang schneller in Richtung des Pfeils B bewegt als das Gurtband 2 in Richtung des Pfeils A und es sozusagen überholt. Zwar ist damit eine Relativbewegung zwischen dem Klemmkeil 4 und dem Gurtband 2 verbunden, jedoch in derjenigen Richtung, in welcher die sägezahnartige Verzahnung der Klemmfläche 15 des Klemmkeils 4 nicht agressiv wirkt. Auf diese Weise lassen sich noch kürzere Gurtbandauszüge bei den Klemmvorgängen erzielen.

Das Gehäuse 3 und der Klemmkeil 4 sind zumindest an den Berührungsstellen mit dem Gurtband 2, nämlich an der Klemmfläche 9 der Klemmwand 8 bzw. an der Klemmfläche 15, und an den beiden zusammenwirkenden Gleitflächen 14, 16 jeweils mit einer dünnen und harten Gleitschicht mit einer Stärke von etwa 0,1 mm überzogen, welche einen äußerst geringen Reibungskoeffizienten bezüglich des Gurtbandes 2 bzw. an der Gleitfläche 14 bzw. 16 vermittelt und vollkommen inkompressibel ist, so daß die Starrheit des Gehäuses 3 und des Klemmkeils 4 nicht beeinflußt wird. Die Gleitschichten auf den beiden Klemmflächen 9, 15 gewährleisten ein außerordentlich schonendes Zusammenwirken mit dem Gurtband 2 beim Festklemmen desselben, die Gleitschichten auf den beiden Gleitflächen 14, 16 eine außerordentlich leichte Verstellbarkeit des Klemmkeils 4 im Gehäuse 3.

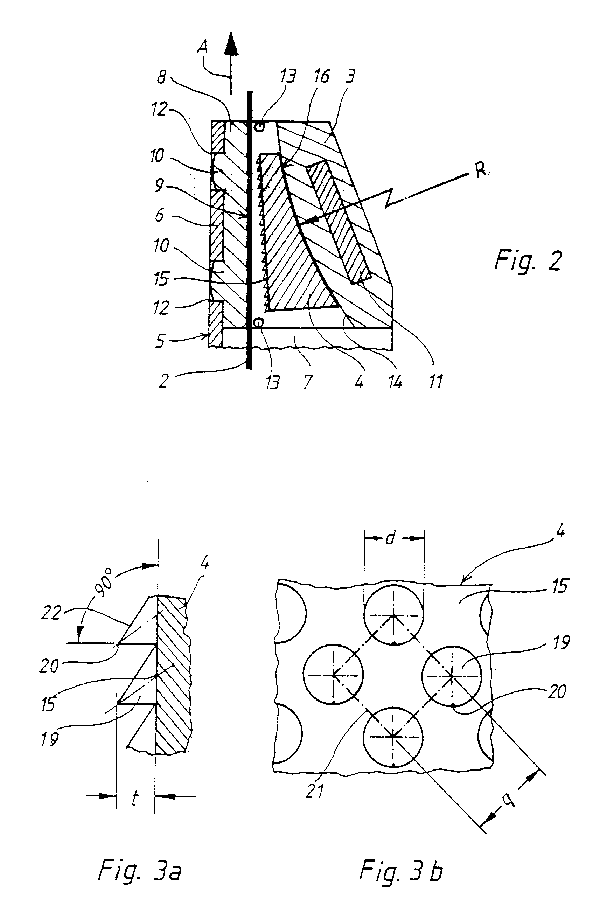

Die Klemmvorrichtung gemäß Fig. 2 unterscheidet sich von derjenigen nach Fig. 1 im wesentlichen nur dadurch, daß die Gleitfläche 14 des Gehäuses 3 in der Bewegungsrichtung des Klemmkeils 4 konvex und dessen Gleitfläche 16 entsprechend konkav gewölbt ist, wobei der Krümmungsradius R verhältnismäßig groß und größer als dargestellt ist, um den erwähnten Klemmspalt zwischen dem Klemmkeil 4 und der Klemmwand 8 des Gehäuses 3 bzw. deren Klemmflächen 9, 15 in der Klemmstellung des Klemmkeils 4 zu erzielen, welcher zur Spitze des Klemmkeils 4 hin breiter wird.

Die sägezahnartige Verzahnung der Klemmfläche 15 des Klemmkeils 4 geht besonders deutlich aus Fig. 3a und 3b hervor. Demgemäß ist die Klemmfläche 15 mit Sägezähnen 19 versehen, deren der Basis des Klemmkeils 4 zugewandten Flanken 20 senkrecht zum benachbarten Gurtband 2 orientiert sind, welches in Fig. 3a und 3b nicht dargestellt ist. Die Sägezähne 19 sind jeweils als schrägachsiger Kegel ausgebildet und weisen jeweils die erwähnte Höhe t von 0,5 mm sowie einen Fußdurchmesser d auf, der etwa 1,5 mal so groß wie die Zahnhöhe t ist. Sie sind in quer zum Gurtband 2 verlaufenden und gegenseitig versetzten Reihen angeordnet, so daß jede Gruppe von vier einander benachbarten Zähnen 19 an den Ecken eines Quadrates 21 liegt, dessen Seitenlänge q 2 bis 2,5 mal so groß wie die Zahnhöhe t ist. Bei einer Breite von 50 mm und einer Höhe von 30 mm der Klemmfläche 15 des Klemmkeils 4 lassen sich auf derselben bei einer Seitenlänge q von 1 mm des Quadrats 21 etwa 1000 Sägezähne 19 unterbringen, so daß die spezifische Belastung des Gurtbandes 2 beim Festklemmen ausreichend niedrig ist, um eine häufige Dauerbelastung und eine hohe Endbelastung zu ermöglichen.

Die jeweils als schrägachsiger Kegel ausgebildeten Sägezähne 19, deren der Basis des Klemmkeils 4 zugewandten und steiler als die der Spitze des Klemmkeils 4 zugewandten Flanken 22 verlaufenden Flanken 20 jeweils von der der Basis des Klemmkeils 4 zugewandten Mantellinie des betreffenden schrägachsigen Kegels gebildet sind, weisen ein Gesamtvolumen auf, welches etwa 80 % des Gesamtvolumens derjenigen Freiräume entspricht, die das Gewebe des Gurtbandes 2 im Bereich der Klemmfläche 15 aufweist, so daß bei einem Klemmvorgang entsprechend viel Luft aus den Freiräumen des Gurtbandes 2 verdrängt wird und der Klemmvorgang starrer abläuft.

## Patentansprüche

1. Klemmvorrichtung für das Gurtband (2) von Fahrzeugsicherheitsgurten mit je einem Klemmglied (4, 8) auf jeder Seite des Gurtbandes (2), wobei ein Klemmglied (4) beweglich und ein Klemmglied (8) unbeweglich ist und wobei das unbewegliche Klemmglied (8) als glatte Gegendruckfläche ausgebildet ist,
**dadurch gekennzeichnet,**
daß das bewegliche Klemmglied (4) an seiner Klemmfläche (15) mit dem Gurtband (2) mit einer Gleitschicht überzogen ist.

2. Klemmvorrichtung nach Anspruch 1, dadurch gekennzeichnet, daß mehrere bewegliche Klemmglieder (4) vorgesehen sind.

3. Klemmvorrichtung nach Anspruch 1 oder 2, dadurch gekennzeichnet, daß das bzw. jedes bewegliche Klemmglied (4) gleitend verstellbar ist und daß auch die Gleitflächen (14, 16) mit einer Gleitschicht überzogen sind.

4. Klemmvorrichtung nach einem der Ansprüche 1-3, dadurch gekennzeichnet, daß die Gleitschicht dünn und hart ausgebildet ist.

5. Klemmvorrichtung nach einem der Ansprüche 1-4, dadurch gekennzeichnet, daß das bzw. jedes bewegliche Klemmglied (4) eine geringe Masse aufweist.

6. Klemmvorrichtung nach Anspruch 5, dadurch gekennzeichnet, daß das bzw. jedes bewegliche Klemmglied (4) aus einer Aluminiumlegierung oder einem harten Kunststoff besteht.

7. Klemmvorrichtung nach einem der Ansprüche 1-6, dadurch gekennzeichnet, daß das bzw. jedes bewegliche Klemmglied (4) mit einem vorgeschalteten selbstsperrenden Gurtbandaufroller (1) derart verbunden ist, daß es beim Sperren desselben verstellbar ist.

8. Klemmvorrichtung nach Anspruch 7, dadurch gekennzeichnet, daß das bzw. jedes bewegliche Klemmglied (4) mit dem sich vom Aufroller wegbewegenden Gurtband (2) jedoch schneller als dasselbe verstellbar ist.

9. Klemmvorrichtung nach einem der Ansprüche 1-8, dadurch gekennzeichnet, daß das bzw. jedes bewegliche Klemmglied (4) entgegen der Wirkung einer Rückholfeder verstellbar ist.

10. Klemmvorrichtung nach einem der Ansprüche 3-9, dadurch gekennzeichnet, daß die beiden Gleitflächen (14, 16) des Gehäuses (3) bzw. des Klemmglieds (4) jeweils eben ausgebildet sind und die Gleitfläche (14) des Gehäuses (3) mit dem Gurtband (2) einen Winkel (α) im Bereich von 22° bis 28°, vorzugsweise einen Winkel (α) von 25° einschließt.

11. Klemmvorrichtung nach Anspuch 10, dadurch gekennzeichnet, daß das Klemmglied (4) einen Keilwinkel (β) größer als der Gleitflächenwinkel (α) aufweist, so daß sich ein zur Spitze des Klemmglieds (4) hin breiter werdender Klemmspalt zwischen dem Klemmglied (4) und dem Klemmglied (8) des Gehäuses (3) bei deren Anlage am Gurtband (2) ergibt.

12. Klemmvorrichtung nach einem der Ansprüche 3-9' dadurch gekennzeichnet, daß die beiden Gleitflächen (14, 16) des Gehäuses (3) bzw. des Klemmglieds (4) in der Bewegungsrichtung des letzteren derart konvex bzw. konkav gekrümmt sind, daß sich ein zur Spitze des Glieds (4) breiter werdender Klemmspalt zwischen dem Klemmglied (4) und dem Klemmglied (8) des Gehäuses (3) bei deren Anlage am Gurtband (2) ergibt.

13. Klemmvorrichtung nach einem der Ansprüche 1-12, dadurch gekennzeichnet, daß die Klemmfläche (15) des Klemmglieds (4) mit Sägezähnen (19) versehen ist, deren der Basis des Klemmglieds (4) zugewandten Flanken (20) senkrecht zum Gurtband (2) orientiert sind.

14. Klemmvorrichtung nach Anspruch 13, dadurch gekennzeichnet, daß die Klemmfläche (15) des Klemmglieds (4) mit kegelförmigen Zähnen (19) versehen ist.

15. Klemmvorrichtung nach Anspruch 14, dadurch gekennzeichnet, daß die Zähne (19) einen Fußdurchmesser (d) aufweisen, welche etwa 1,5 mal so groß wie die Zahnhöhe (t) ist.

16. Klemmvorrichtung nach einem der Ansprüche 13-15, dadurch gekennzeichnet, daß die Zähne (19) der Klemmfläche (15) des Klemmglieds (4) in quer zum Gurtband (2) verlaufenden und gegenseitig versetzten Reihen angeordnet sind, so daß jede Gruppe von vier einander benachbarten Zähnen (19) an den Ecken eines Quadrates (21) liegt, dessen Seitenlänge (q) 2 bis 2,5 mal so groß wie die Zahnhöhe (t) ist.

17. Klemmvorrichtung nach einem der Ansprüche 13-16, dadurch gekennzeichnet, daß die Zähne (19) der Klemmfläche (15) des Klemmglieds (4) ein Gesamtvolumen aufweist, welches etwa 80% des Gesamtvolumens der Freiräume entspricht, die das Gewebe des Gurtbandes (2) im Bereich der Klemmfläche (15) aufweist.

18. Klemmvorrichtung nach einem der Ansprüche 1-17, gekennzeichnet durch Führungen (13) für das Gurtband (2), so daß es sich dicht an der Klemmfläche (9) für das Gurtband (2) entlang erstreckt, die an dem Klemmglied (8) des Gehäuses (3) vorgesehen ist.

19. Klemmvorrichtung nach einem der Ansprüche 1-18, dadurch gekennzeichnet, daß das Gehäuse (3) in einem U-förmigen Halteblech angeordnet ist, wobei das Klemmglied (8) des Gehäuses (3) mit Warzen (10) auf der ihrer Klemmfläche (9) für das Gurtband (2) abgewandten Seite in entsprechende Öffnungen (12) des Bodens (6) und ein das Gehäuse (3) auf der dem Klemmglied (8) abgewandten Seite des Klemmglieds durchsetzender Quersteg (11) in entsprechende Öffnungen der Seitenschenkel (7) des Halteblechs (5) eingreifen.

## Claims

1. A clamping device for the belt band (2) of vehicle safety belts with one clamping member (4, 8) on each side of the belt band (2), one clamping member (4) being movable and one clamping member (8) being non-movable, the non-movable clamping member (8) being designed with a smooth counter-pressure face,
**wherein**
the movable clamping member (4) is coated with a sliding liner at its clamping surface (15) in contact with the belt band (2).

2. A clamping device as claimed in claim 1, wherein several movable clamping members (4) are provided.

3. A clamping device as claimed in claim 1 or 2, wherein the or each movable clamping member (4) is smoothly adjustable by sliding, and the sliding faces (14, 16) are likewise coated with a sliding liner.

4. A clamping device as claimed in one of claims 1-3, wherein the sliding liner is of a thin and hard construction.

5. A clamping device as claimed in one of claims 1-4, wherein the or each movable clamping member (4) exhibits a small mass.

6. A clamping device as claimed in claim 5, wherein the or each movable clamping member (4) consists of an aluminium alloy or a hard or rigid plastics.

7. A clamping device as claimed in one of claims 1-6, wherein the or each movable clamping member (4) is connected to a preceding self-blocking belt band retractor (1) such that it is adjustable on blocking of same.

8. A clamping device as claimed in claim 7, wherein, with the belt band (2) moving away from the retractor, the or each movable clamping member (4) can nevertheless be adjusted more quickly than same.

9. A clamping device as claimed in one of claims 1-8, wherein the or each movable clamping member (4) can be adjusted counter to the effect of a retractor spring.

10. A clamping device as claimed in one of claims 3-9, wherein the two sliding faces (14, 16) of the housing (3) and clamping member (4) respectively are each of plane construction and the sliding face (14) of the housing (3) forms an included angle (α) with the belt band (2) in the range from 22° to 28°, preferably an angle (α) of 25°.

11. A clamping device as claimed in claim 10, wherein clamping member (4) exhibits a wedge angle (β) greater than the sliding face angle (α), thus yielding a clamping gap, widening towards the tip of clamping member (4), between clamping member (4) and clamping member (8) of the housing (3) when they are engaged at the belt band (2).

12. A clamping device as claimed in one of claims 3-9, wherein the two sliding faces (14, 16) of the housing (3) and clamping member (4) respectively are, in the direction of movement of the latter, curved in convex and concave shapes respectively, thus yielding a clamping gap, widening towards the tip of clamping member (4), between clamping member (4) and clamping member (8) of the housing (3) when they are engaged at the belt band (2).

13. A clamping device as claimed in one of claims 1-12, wherein the clamping face (15) of clamping member (4) is provided with serrations (19) of which the flanks (20) facing the base of clamping member (4) are oriented perpendicular to the belt band (2).

14. A clamping device as claimed in claim 13, wherein the clamping face (15) of clamping member (4) is provided with conical teeth (19).

15. A clamping device as claimed in claim 14, wherein the conical teeth (19) exhibit a base diameter (d) which is approximately 1.5 times the tooth depth (t).

16. A clamping device as claimed in one of claims 13-15, wherein the teeth (19) of the clamping face (15) of clamping member (4) are arranged in rows running transverse to the belt band (2) which are adjacently offset so that each group of four adjacent teeth (19) lies at the corners of a square (21), the side length (q) of which is 2 to 2.5 times the tooth depth (t).

17. A clamping device as claimed in one of claims 13-16, wherein the teeth (19) of the clamping face (15) of clamping member (4) exhibit a total volume corresponding to approximately 80% of the total volume of the vacant spaces exhibited by the fabric of the belt band (2) in the area of the clamping face (15).

18. A clamping device as claimed in one of claims 1-17, wherein guides (13) are provided for the belt band (2) so that it extends tightly against the clamping face (9) for the belt band (2) located at clamping member (8) of the housing (3).

19. A clamping device as claimed in one of claims 1-18, wherein the housing (3) is arranged in a channel-section metallic retainer, clamping member (8) of the housing (3) engaging by means of integral buttons (10) on the face opposite to its clamping face (9) for the belt band (2) in corresponding apertures (12) arranged in the web (6), and a cross member (11) passing through the housing (3) beyond the side of clamping member (4) furthest away from clamping member (8) and engaging in corresponding apertures in the side flanges (7) of the metallic retainer (5).

## Revendications

1. Dispositif de serrage pour la sangle (2) de ceintures de sécurité de véhicules à moteur, comportant de chaque côté de la sangle (2) un élément de serrage ( 4, 8), un élément de serrage (4) étant mobile et un élément de serrage (8) étant immobile, et l'élément de serrage immobile (8) étant formé comme une surface de contre-pression lisse,
**caractérisé en ce que**
l'élément de serrage (4) mobile est revêtu sur sa surface de serrage (15) avec la sangle (2) d'une couche glissante.

2. Dispositif de serrage selon la revendication 1, caractérisé en ce que plusieurs éléments de serrage (4) mobiles sont prévus.

3. Dispositif de serrage selon les revendications 1 ou 2, caractérisé en ce que l'élément de serrage (4) ou chaque élément de serrage (4) mobile peut se déplacer en glissant et que les surfaces de glissement (14, 16) sont revêtues d'une couche glissante.

4. Dispositif de serrage selon l'une des revendications 1 à 3, caractérisé en ce que la couche glissante est mince et dure.

5. Dispositif de serrage selon l'une des revendications 1 à 4, caractérisé en ce que l'élément de serrage (4) ou chaque élément de serrage (4) mobile présente une faible masse.

6. Dispositif de serrage selon la revendication 5, caractérisé en que l'élément de serrage (4) ou chaque élément de serrage (4) mobile consiste en un alliage d'aluminium ou un plastique dur.

7. Dispositif de serrage selon l'une des revendications 1 à 6, caractérisé en ce que l'élément de serrage (4) ou chaque élément de serrage (4) mobile est raccordé à un enrouleur de sangle (1) autobloquant, en amont, de manière à ce qu'il puisse se déplacer lorsque l'enrouleur bloque.

8. Dispositif de serrage selon la revendication 7, caractérisé en ce que l'élément de serrage (4) ou chaque élément de serrage (4) mobile peut se déplacer avec la sangle (2) qui s'éloigne de l'enrouleur, mais à une vitesse supérieure.

9. Dispositif selon l'une des revendications 1 à 8, caractérisé en ce que l'élément de serrage (4) ou chaque élément de serrage (4) mobile peut se déplacer contre l'effet d'un ressort de rappel.

10. Dispositif de serrage selon l'une des revendications 3 à 9, caractérisé en ce que les deux surfaces de glissement (14, 16) du boîtier (3) ou de l'élément de serrage (4) ont une configuration plane et que la surface de glissement (14) du boîtier (3) et la sangle (2) renferment un angle (α) dans la plage de 22° à 28°, de préférence un angle (α) de 25°.

11. Dispositif de serrage selon la revendication 10, caractérisé en ce que l'élément de serrage (4) présente un angle de cône (β) supérieur à l'angle de la surface de glissement (α) de sorte qu'il résulte une fente de serrage s'élargissant en direction de la pointe de l'élément de serrage (4) entre l'élément de serrage (4) et l'élément de serrage (8) du boîtier (3) lorsque ceux-ci reposent contre la sangle (2).

12. Dispositif de serrage selon l'une des revendications 3 à 9, caractérisé en ce que les deux surfaces de glissement (14, 16) du boîtier (3) ou de l'élément de serrage (4) sont courbées de manière convexe ou concave dans la direction de mouvement de l'élement de serrage (4), de manière à ce qu'une fente de serrage s'élargissant vers la pointe de l'élément (4) se produit entre l'élément de serrage (4) et l'élément de serrage (8) du boîtier (3) lorsque ceux-ci reposent contre la sangle (2).

13. Dispositif selon l'une des revendications 1 à 12, caractérisé en ce que la surface de serrage (15) de l'élément de serrage (4) est pourvue de dents de scie (19) dont les flancs (20) tournés vers la base de l'élément de serrage (4) sont orientés perpendiculairement par rapport à la sangle (2).

14. Dispositif de serrage selon la revendication 13, caractérisé en ce que la surface de serrage (15) de l'élément de serrage (4) est pourvue de dents (19) coniques.

15. Dispositif de serrage selon la revendication 14, caractérisé en ce que les dents (19) présentent un diamètre de base (d) qui est approximativement de une fois et demie la hauteur de dents (t).

16. Dispositif de serrage selon l'une des revendications 13 à 15, caractérisé en ce que les dents (19) de la surface de serrage (15) de l'élément de serrage (4) sont disposées en rangées transversales par rapport à la sangle (2) et réciproquement décalées de sorte que chaque groupe de quatre dents (19) voisines repose contre les coins d'un carré (21) dont la longueur de côté (q) est de 2 à 2 fois et demie la hauteur des dents (t).

17. Dispositif de serrage selon l'une des revendications 13 à 16, caractérisé en ce que les dents (19) de la surface de serrage (15) de l'élément de serrage (4) présentent un volume total qui est approximativement 80 % du volume total des espaces libres que présente le tissu de la sangle (2) dans la zone de la surface de serrage (15).

18. Dispositif de serrage selon les revendications 1 à 17, caractérisé par des guidages (13) pour la sangle (2) de sorte qu'elle s'étend très près de la surface de serrage (9) pour la sangle (2) qui est prévue sur l'élément de serrage (8) du boîtier (3).

19. Dispositif de serrage selon l'une des revendications 1 à 18, caractérisé en ce que le boîtier (3) est disposé dans une tôle de fixation en forme de U, l'élément de serrage (8) du boîtier (3) s'engageant avec des boutons (10) sur le côté détourné de leur surface de serrage (9) pour la sangle (2) dans des ouvertures correspondantes (12) du fond (6) et une traverse (11), traversant le boîtier (3) sur le côté de l'élément de serrage (4) détourné de l'élément de serrage (8), s'engageant dans des ouvertures correspondantes des branches latérales (7) de la tôle de fixation (5).
